Europäisches Patentamt

European Patent Office

Office européen des brevets

(11) Numéro de publication: **0 340 067**
**A1**

## (12) DEMANDE DE BREVET EUROPEEN

(21) Numéro de dépôt: **89401025.5**

(22) Date de dépôt: **14.04.89**

(51) Int. Cl.⁴: **C 12 G 1/02**

(30) Priorité: **27.04.88 FR 8805731**

(43) Date de publication de la demande:
**02.11.89 Bulletin 89/44**

(84) Etats contractants désignés:
**CH DE ES GR IT LI**

(71) Demandeur: **Fabbri, Frédéric**
**Avenue Victor Hugo**
**F-84320 Entraigues-sur-Sorgues (FR)**

(72) Inventeur: **Fabbri, Frédéric**
**Avenue Victor Hugo**
**F-84320 Entraigues-sur-Sorgues (FR)**

(74) Mandataire: **Bugnon-Hays, Claudine**
**PATCO S.A. 39, Boulevard René Cassin B.P.4**
**F-84170 Monteux (FR)**

(54) **Cuve de fermentation munie d'un dispositif de "pigeage".**

(57) La présente invention concerne une cuve de fermentation du type constitué d'un fût vertical (1) fermé par un toit (2) muni d'une cheminée (3).

Cette cuve se caractérise par le fait que l'immersion de la phase solide (4) en cours de fermentation située au-dessus de la phase liquide (5) dans ladite cuve, est réalisée à l'aide d'au moins une chambre gonflable (6) et d'un support (7) et reliée par des moyens de liaison (8) à un système d'alimentation à température contrôlée en eau ou en air comprimé, cette dite chambre gonflable (6) étant introduite sous la surface intérieure (9) dudit toit (2) par l'ouverture extérieure de ladite cheminée (3).

Cette invention est applicable notamment pour l'opération de "pigeage" réalisée lors de la fermentation du raisin dans ces dites cuves.

Fig.1

Bundesdruckerei Berlin

## Description

### Cuve de fermentation munie d'un dispositif de "pigeage"

La présente invention concerne une cuve de fermentation utilisée notamment dans le domaine agro-alimentaire pour la fermentation de raisins.

Les cuves se présentent traditionnellement sous la forme de fûts en inox ou en béton, dressés verticalement dont la toiture de forme cônique ou horizontale, est munie d'une cheminée.

Lors de la fermentation du raisin dans ces dites cuves, deux phases se forment, à savoir une phase liquide constituée de jus de raisin, surmontée d'une phase solide, plus communément appelée le "gâteau de marc".

Afin d'obtenir un vin de meilleure qualité du point de vue aromatique, on procède au "pigeage" du "gâteau de marc" en fermentation c'est-à -dire à son immersion dans la phase liquide.

On connaît déjà dans l'art antérieur un système de "pigeage" mécanique mettant en oeuvre un mécanisme de vérins qui repoussent ladite phase solide dans le jus de raisin. Cependant, ce mécanisme à l'aide de vérins est lourd à mettre en place, et une fois que les vérins sont installés, ils restent définitivement à l'intérieur de la cuve, ce qui représente un inconvénient du point de vue hygiène alimentaire.

De plus, les cuves équipées de la sorte représentent un investissement et un coût d'entretien importants.

La cuve, selon la présente invention, a pour objet de remédier à ces inconvénients. En effet, elle propose une simplification du système de "pigeage", celui-ci étant réalisé à l'aide d'au moins une chambre, gonflable par l'action de l'air comprimé ou de l'eau, qui pousse verticalement le "gâteau de marc" vers le bas, c'est-à-dire au sein de la phase liquide.

Plus précisément, la cuve, objet de la présente invention, se présentant sous la forme d'un fût vertical du type fermé par un toit muni d'une cheminée, se caractérise par le fait que l'immersion de la phase solide en cours de fermentation située au-dessus de la phase liquide, est réalisée à l'aide d'au moins une chambre gonflable munie d'un support et reliée par des moyens de liaison à un système d'alimentation à température contrôlée en eau ou en air comprimé, cette dite chambre gonflable étant introduite sous la surface intérieure dudit toit par l'ouverture extérieure de ladite cheminée.

Dans le mode préféré de réalisation de l'invention, ladite cuve comporte plusieurs chambres gonflables réparties sous ledit fond intérieur du toit, le gonflage de ces dites chambres pouvant être effectué soit ensemble, soit en solo ou soit par groupe, afin d'obtenir une meilleure immersion de ladite phase solide.

Lorsque l'opération d'immersion ou "pigeage" est terminée, on aspire l'air ou l'eau contenu dans ces dites chambres, afin que celles-ci se plaquent par dépression sur leur support.

D'autres avantages et formes de réalisation ressortiront mieux de la description illustrée par les dessins suivants :

- figure 1 représente une vue en coupe longitudinale de la cuve selon l'invention,
- figure 2 représente une vue de dessus de la cuve selon l'invention,
- figure 3 est une vue en coupe transversale selon la ligne I -I de la figure 2.

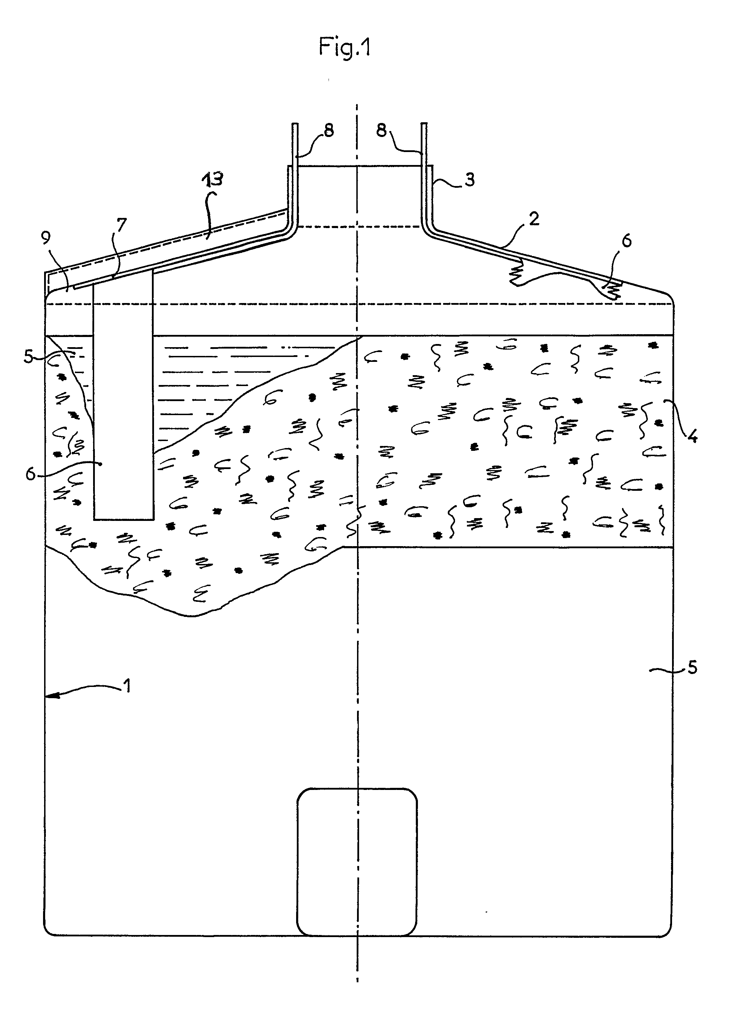

La cuve représentée selon la figure 1 comporte un fût vertical (1) de préférence cylindrique avec un toit (2) muni d'une cheminée (3). La surface intérieure (9) dudit toit (2) comporte au moins une chambre gonflable (6) muni d'un support (7) et relié par des moyens de liaison (8) à un système d'alimentation à température contrôlée en eau ou en air comprimé, ce qui permet de réaliser l'immersion de la phase solide (4) située au-dessus de la phase liquide (5) à l'intérieur dudit fût (1).

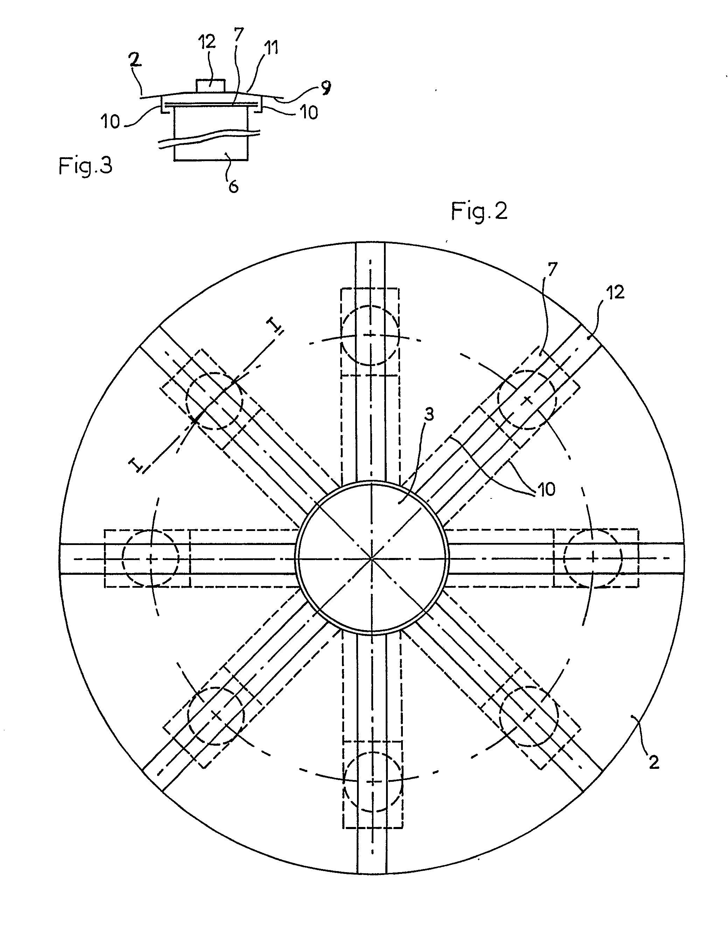

Dans le mode préféré de réalisation de l'invention (figures 2 et 3), la surface intérieure (9) dudit toit (2) comporte des glissières de guidage (10) coopérant avec les bords latéraux dudit support (7) dont est munie chacune desdites chambres gonflables (6) afin de permettre le maintien desdites chambres gonflables (6), une fois que celles-ci sont introduites par ladite cheminée (3).

De plus, ce système de glissières de guidage (10) permet de rendre ces chambres gonflables (6) amovibles, c'est-à-dire qu'elles sont facilement enlevées de la cuve une fois que l'opération de "pigeage" est terminée.

Dans une variante de réalisation de l'invention, on peut envisager le cas où chaque chambre gonflable (6) est en position fixe sous ladite surface intérieure (9) du toit (2). Dans cette forme de réalisation, ledit support (7) de chaque chambre gonflable (6) est alors fixé directement sur le fond intérieur (9) du toit (2).

De façon générale, la présence de ces dites chambre gonflables (6) pèse sur ledit toit (2), c'est pourquoi, afin que celui-ci ne plie pas sous l'action de ces dites chambres, on peut mettre en place, sur la surface extérieure (11) dudit toit (2), des raidisseurs extérieurs (12) qui renforcent ce dit toit (2).

On peut également envisager le cas où on place, préalablement à l'introduction desdites chambres gonflables (6), une plaque de renfort (13) sous ladite surface intérieure (9) dudit toit (2).En ce qui concerne lesdits moyens de liaison (8) qui permettent de relier chacune desdites chambres gonflables (6) à un système d'alimentation à température contrôlée en eau ou en air comprimé, ces dits moyens sont constitués selon le mode préféré de réalisation de l'invention, par un tuyau d'alimentation (8) rigide ou souple, partant de la partie supérieure de ladite chambre gonflable (6) et débouchant à l'extérieur de ladite cheminée (3).

Toujours selon le mode préférenciel de réalisation de l'invention, lesdites chambres de gonflage (6) sont de forme cylindrique et constituées de P.V.C. armé alimentaire et souple, ledit support (7) étant quant à lui en inox.

Bien entendu, ces dites chambres gonflables (6) revêtent des formes de dimension variée, à savoir, par exemple, parallélépipédique.

Le système de "pigeage" ou d'immersion de la phase solide (4) au sein de la phase liquide (5) de la cuve de fermentation fonctionne selon le mode de réalisation représenté ici (figures 1, 2 et 3), de la manière suivante :

On introduit une ou plusieurs chambres gonflables (6) par ladite cheminée (3) dans lesdites glissières de guidage (10) de la surface intérieure (9) dudit toit (2) de la cuve (1), puis on gonfle les dites chambres gonflables (6) à l'aide d'une source à température contrôlée d'air comprimé ou d'eau à laquelle est reliée chacune desdites chambres gonflables (6) par l'intermédiaire d'un tuyau d'alimentation (8). Chacune de ces dites chambres gonflables (6) poussent ladite phase solide (4) ou "gâteau de marc". Lorsque l'opération de "pigeage" est terminée, on aspire l'air ou l'eau contenu dans ces dites chambres gonflables (6), celles-ci venant se placer par dépression sur leurs dits supports (7).

Les avantages de ce dispositif sont considérables puisqu'il s'agit d'un système de "pigeage" simple à mettre en oeuvre, pouvant être utilisé dans tous les types de cuves. En effet, que les cuves soient en béton avec une toiture horizontale ou en inox avec une toiture cônique, il suffit d'aménager la surface intérieure (9) de ces dites toitures, de glissières de guidage (8), préalablement à l'introduction par la cheminée (3) de ces dites chambres gonflables (6).

De plus, la qualité du "pigeage" est nettement améliorée puisqu'on peut régler celui-ci à la fois selon le nombre de chambres gonflables (6) présentes et également selon la répartition du gonflage de ces différentes chambres gonflables (6). En effet, on peut très bien envisager les cas ou soit toutes les chambres (6) sont gonflées en même temps, soit les chambres de gonflage (6) sont gonflées l'une après l'autre, ou enfin lesdites chambres (6) sont gonflées par groupe, un ensemble de chambres (6) étant gonflé tandis qu'un autre groupe est dégonflé et vice-versa.

En d'autres termes, il s'agit d'un système de "pigeage" modulable, puisqu'il permet à la fois un contrôle de la répartition du gonflage et un contrôle thermique selon la température de l'eau ou de l'air comprimé envoyé.

Bien entendu, l'invention n'est pas limitée aux modes de réalisation décrits et représentés ici, mais on peut y apporter d'autres modifications sans pour cela sortir du cadre de l'invention.

## Revendications

1. Cuve de fermentation constituée d'un fût vertical (1) fermé par un toit (2) muni d'une cheminée (3), caractérisée en ce que l'immersion de la phase solide (4) située au-dessus de la phase liquide (5) est réalisée à l'aide d'au moins une chambre gonflable (6) munie d'un support (7) et reliée par des moyens de liaison (8) à un système d'alimentation à température contrôlée en eau ou en air comprimé, ladite chambre gonflable (6) étant introduite sous la surface intérieure (9) du toit (2) par l'ouverture extérieure de ladite cheminée (3).

2. Cuve de fermentation selon la revendication 1, caractérisée en ce que ladite surface intérieure (9) du toit (2) comporte des glissières de guidage (10) coopérant avec ledit support (7) de chaque chambre gonflable (6).

3. Cuve de fermentation selon la revendication 1, caractérisée en ce que lesdits supports (7) de chaque chambre gonflable (6) sont placés en position fixe sur ladite surface intérieure (9) dudit toit (2).

4. Cuve de fermentation selon l'une quelconque des revendications 1 à 3, caractérisée en ce que la surface extérieure (11) dudit toit (2) est munie de raidisseurs extérieurs (12).

5. Cuve de fermentation selon l'une quelconque des revendications 1 à 3, caractérisée en ce que ladite surface intérieure (9) dudit toit (2) est renforcée par une plaque de renfort (13).

6. Cuve de fermentation selon l'une quelconque des revendications 1 à 5, caractérisée en ce que les dits moyens de liaison (8) de chaque chambre gonflable (6) avec un système d'alimentation à température contrôlée en eau ou en air comprimé, sont constitués par un tuyau d'alimentation (8) en matière rigide ou souple, partant de la partie supérieure de chacune des dites chambres gonflables (6) et débouchant dans l'ouverture extérieure de ladite cheminée (3).

7. Cuve de fermentation selon l'une quelconque des revendications 1 à 6, caractérisée en ce que chacune des chambres gonflables (6) se présente sous la forme d'un cylindre.

8. Cuve de fermentation selon l'une quelconque des revendications 1 à 7, caractérisée en ce que chaque chambre gonflable (6) est constituée d'une feuille en P.V.C. armé souple et alimentaire.

Fig.1

Fig.3

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 615 551 (K.-H. QUETSCH) <br> * Revendication; figures * | 1,3,6-8 | C 12 G 1/02 |
| A | ----- | 2,4,5 | |

**DOMAINES TECHNIQUES RECHERCHES (Int. Cl.4)**

C 12 G

Le présent rapport a été établi pour toutes les revendications

| Lieu de la recherche | Date d'achèvement de la recherche | Examinateur |
|---|---|---|
| LA HAYE | 09-06-1989 | COUCKE A.O.M. |

EPO FORM 1503 03.82 (P0402)